# NOUVEAU FASCICULE DE BREVET EUROPEEN

(11) **EP 3 177 820 B2**
(45) Date de publication et mention de la décision concernant l'opposition: **27.08.2025**
(45) Mention de la délivrance du brevet: 15.07.2020
(21) Numéro de dépôt: 15757536.6
(22) Date de dépôt: 04.08.2015
(51) Int. Cl.: F02K 3/06, F02C 7/32, F02C 7/36

(54) **HYBRIDATION DES COMPRESSEURS D'UN TURBORÉACTEUR**
HYBRIDISIERUNG DER VERDICHTER EINER STRAHLTURBINE
HYBRIDISATION OF THE COMPRESSORS OF A TURBOJET

(30) Priorité: 08.08.2014 FR 1457703
(43) Date de publication de la demande: 14.06.2017
(73) Titulaire: Safran Aircraft Engines, 75015 Paris (FR)
(72) Inventeur: ROBIC, Bernard, F-77550 Moissy-Cramayel (FR); OBRECHT, Thierry, Jean-Jacques, F-77550 Moissy-Cramayel (FR); RENAULT, Baptiste, Jean, Marie, F-77550 Moissy-Cramayel (FR)
(74) Mandataire: Gevers & Orès
(86) Numéro de dépôt international: PCT/FR2015/052152
(87) Numéro de publication internationale: WO 2016/020618

(56) Documents cités:
- EP-A1- 2 584 173
- EP-A2- 1 785 614
- EP-A2- 2 604 827
- FR-A1- 2 914 697
- US-A- 5 694 765
- US-A1- 2011 154 827

## Description

### Domaine de l'invention

Le domaine de la présente invention est celui des turbomachines aéronautiques, et en particulier celui des moteurs d'aéronefs réalisés sous la forme de turboréacteurs double corps, double flux, à fort taux de dilution.

### Etat de la technique

La conception des turboréacteurs modernes nécessite de prendre en compte, pour le dimensionnement de leurs compresseurs, une marge suffisante contre le phénomène dit de pompage. Ce phénomène qui résulte d'une incidence excessive du flux d'air sur les pales d'un des compresseurs aboutit à des fluctuations importantes et rapides de la pression en aval du compresseur concerné et peut conduire à une extinction de la chambre de combustion. Il génère en outre des à-coups importants sur les aubages du compresseur et peut ainsi conduire à des dégradations mécaniques. Il convient donc tout particulièrement d'éviter son apparition. Le fonctionnement d'un compresseur en utilisation est généralement représenté par un diagramme qui exprime le rapport de pression obtenu entre la sortie et l'entrée, en fonction du débit d'air qui le traverse ; ce diagramme est en outre paramétré en fonction de la vitesse de rotation du compresseur. Dans ce diagramme figure une ligne de pompage qui constitue la limite maximale en taux de compression à ne pas dépasser, pour ne pas risquer l'apparition du pompage. Et on définit une ligne, dite de fonctionnement, qui donne les taux de compression obtenus en fonction du débit, lorsque le moteur est en fonctionnement stabilisé. Le positionnement de cette ligne de fonctionnement est laissé à l'appréciation du concepteur de la turbomachine et la distance de cette ligne à la ligne de pompage représente la marge au pompage.

Il convient de remarquer que le rendement du compresseur (travail de compression fourni à l'air, rapporté au travail fourni pour l'entraîner en rotation) est, en première approximation (et cela sera expliqué plus en détail dans la suite de la description), meilleur au fur et à mesure que l'on se rapproche de la ligne de pompage. A contrario, les accélérations demandées par le pilote à partir d'un fonctionnement stabilisé pour obtenir une augmentation de la poussée, se traduisent au niveau du compresseur par une excursion du point de fonctionnement qui s'effectue en direction de la ligne de pompage. En effet une injection supplémentaire de carburant dans la chambre de combustion provoque une élévation quasi instantanée du taux de compression, alors même que la vitesse de rotation n'a pas le temps d'augmenter du fait de l'inertie du rotor qui porte le compresseur. La variation d'enthalpie apportée au fluide par la combustion du carburant ajouté génère alors une augmentation du travail fourni par chaque turbine et, par conséquent une augmentation de la vitesse de rotation du corps correspondant. Ceci se traduit au niveau du diagramme du compresseur par un retour du point de fonctionnement sur la ligne de fonctionnement lorsque le régime se stabilise à nouveau, à un point qui correspond à un débit plus élevé que celui du point précédent.

L'état de la technique comprend notamment le document EP-A1-2 584 173.

Le concepteur d'une turbomachine doit donc essayer d'optimiser le placement de la ligne de fonctionnement en la plaçant le plus haut possible, de façon à bénéficier de meilleurs rendements pour ses compresseurs, tout en gardant une distance suffisante vis à vis de la ligne de pompage pour permettre des accélérations sûres.

### Exposé de l'invention

La présente invention a pour but de remédier à ces inconvénients en proposant un dispositif d'optimisation de la marge au pompage des compresseurs de façon à réduire les contraintes pesant sur les concepteurs de turbomachines. Elle tend par ailleurs à améliorer le fonctionnement du turboréacteur dans la phase de ralenti en vol.

A cet effet, l'invention a pour objet un turboréacteur double corps double flux selon la revendication 1.

Un dispositif d'injection de puissance comprend un arbre d'injection de puissance qui engrène par tout moyen approprié sur l'arbre de rotation considéré et qui est entraîné par un élément moteur apte à fournir une puissance additionnelle sur cet arbre.

Une injection de puissance, notamment sur l'arbre HP (Haute Pression), permet d'améliorer, tant la marge au pompage du compresseur BP (Basse Pression) que celle du compresseur HP. Cette marge, accessible pendant la mise en œuvre du dispositif, permet au turboréacteur de fonctionner en régime stabilisé avec des marges réduites et donc de profiter des meilleurs rendements du compresseur.

Avantageusement le turboréacteur comprend un dispositif de prélèvement de puissance sur au moins un de ses arbres de rotation, dimensionné pour extraire une puissance excédentaire par rapport au besoin d'actionnement des servitudes du turboréacteur. Ce dispositif permet d'alimenter le dispositif d'injection de puissance ci-dessus.

Le dispositif d'injection de puissance et le dispositif de prélèvement de puissance peuvent être séparés ou bien formés d'un dispositif unique réversible,

De façon plus préférentielle, le moteur électrique est relié audit dispositif de prélèvement de puissance et engrène sur le ou lesdits arbres de rotation pour assurer ladite injection de puissance.

Avantageusement, le moyen de stockage électrique est positionné en parallèle entre ledit dispositif de prélèvement de puissance et ledit moteur électrique. Ce moyen fait office de tampon dans le circuit de production et de fourniture d'énergie électrique.

Dans un mode particulier de réalisation l'injection de puissance s'effectue sur l'arbre haute pression. Il s'agit d'une configuration plus favorable du point de vue de l'opérabilité, c'est-à-dire du point de vue des accélérations admissibles par le moteur, car elle procure à la fois une amélioration de la marge au pompage du compresseur BP et du compresseur HP.

Avantageusement le turboréacteur ci-dessus comprend en outre un dispositif de prélèvement de puissance sur l'arbre basse pression dimensionné pour extraire une puissance excédentaire par rapport au besoin d'actionnement des servitudes du turboréacteur.

Dans une première alternative selon l'invention, l'injection de puissance est effectuée à une vitesse de rotation du corps haute pression supérieure ou égale à 80% de sa vitesse de rotation au plein gaz. Le fonctionnement à haut régime du moteur, et notamment au cours du régime de croisière, peut s'effectuer alors avec des marges réduites et bénéficier d'une optimisation du positionnement, sur le plan du rendement, de la ligne de fonctionnement dans le champ compresseur. L'injection de puissance peut aussi viser des points stabilisés dans des conditions où le compresseur a une marge faible pour dessiner un compresseur avec une marge plus faible hors injection de puissance et ainsi bénéficier des meilleurs rendements sur des points opérationnels sans injection continue de puissance.

Dans une seconde alternative selon l'invention, l'injection de puissance est effectuée au ralenti en vol. Celle-ci permet de réduire la quantité de carburant injectée, tout en gardant des vitesses de rotation compatibles avec une utilisation normale du moteur, tout en conservant les conditions de sécurité pour une ré accélération rapide du moteur et son ré-allumage en cas d'extinction.

Préférentiellement, le turboréacteur comprend en outre un dispositif de débrayage entre l'arbre basse pression et l'arbre d'entraînement de la soufflante et comprend un dispositif de prélèvement de puissance sur l'arbre d'entraînement de la soufflante relié audit dispositif d'injection de puissance sur l'arbre haute pression.

Dans une utilisation particulière l'injection de puissance est effectuée au cours du mode débrayé du dispositif de débrayage. De la puissance est prélevée sur la soufflante par le moyen d'un dispositif d'inversion de pas des pales pour mettre la soufflante en mode turbine et réinjecter cette puissance sur le corps HP pour lui conserver un mode de fonctionnement normal.

Dans un autre mode particulier de réalisation, l'injection de puissance s'effectue également sur l'arbre basse pression.

### Présentation des figures

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention qui sont donnés à titre d'exemples purement illustratifs et non limitatifs, en liaison avec les dessins schématiques annexés.

Sur ces dessins :
- la figure 1 est une vue générique d'un turboréacteur double corps et double flux ;
- la figure 2 est une vue générique d'un turboréacteur équipé de dispositifs d'amélioration de la gestion de la marge au pompage, selon l'invention ;
- la figure 3 est une vue générique d'un turboréacteur équipé de dispositifs d'amélioration mis en œuvre sur le compresseur basse pression ;
- la figure 4 est une vue générique d'un turboréacteur équipé de dispositifs d'amélioration mis en œuvre sur le compresseur haute pression ;
- la figure 5 est une vue générique d'un turboréacteur équipé de dispositifs d'amélioration de la gestion du ralenti en vol et en mode d'autorotation ;
- la figure 6 est une vue du diagramme de fonctionnement d'un compresseur haute pression d'un turboréacteur ;
- la figure 7 est une vue des diagrammes de fonctionnement des compresseurs BP et HP lors d'une injection de puissance sur l'arbre HP.

### Description détaillée de l'invention

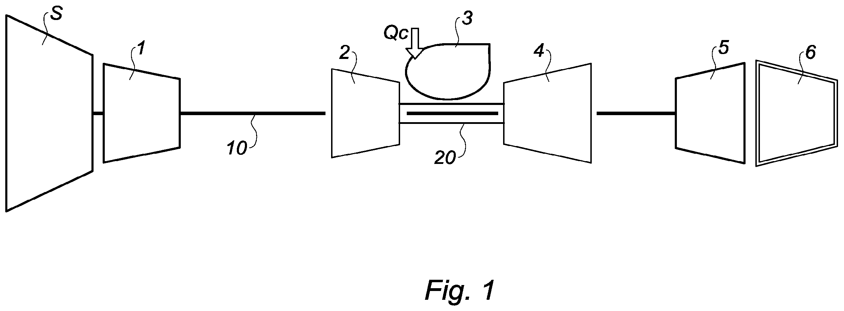

En se référant à la figure 1, on voit de façon générique un turboréacteur double corps double flux à soufflante. Il comprend classiquement, d'amont en aval dans le sens de l'écoulement des gaz, une soufflante S, un compresseur basse pression 1, un compresseur haute pression 2, une chambre de combustion 3 qui reçoit un débit de carburant Qc, une turbine haute pression 4, une turbine basse pression 5 et une tuyère primaire d'échappement 6. Le compresseur basse pression (ou BP) 1 et la turbine basse pression 5 sont reliés par un arbre basse pression 10 et forment ensemble un corps basse pression. Le compresseur haute pression (ou HP) 2 et la turbine haute pression 4 sont reliés par un arbre haute pression 20 et forment ensemble, avec la chambre de combustion, un corps haute pression.

La soufflante S, qui est entraînée, soit directement, soit par l'intermédiaire d'un réducteur, par l'arbre BP 10, comprime l'air issu de la manche d'entrée d'air. Cet air se divise en aval de la soufflante entre un flux d'air secondaire qui est dirigé directement vers une tuyère secondaire (non représentée) par laquelle il est éjecté pour participer à la poussée fournie par le moteur, et un flux dit primaire qui pénètre dans le générateur de gaz, constitué par les corps basse et haute pression, puis qui est éjecté dans la tuyère primaire 6. L'invention couvre également le cas où les deux flux, primaire et secondaire sont mélangés avant éjection.

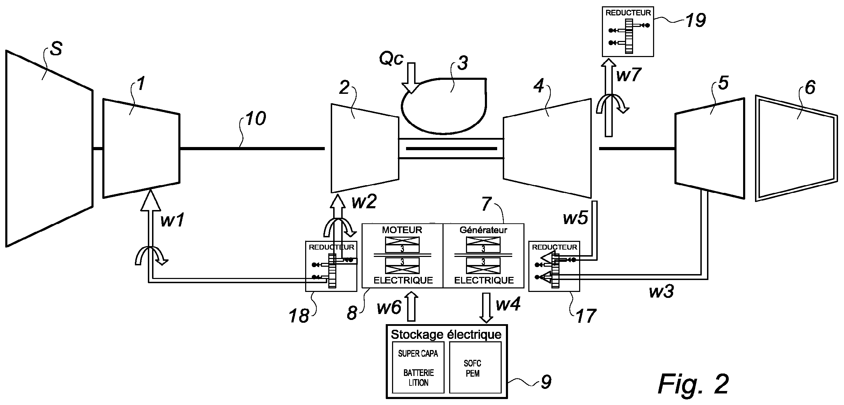

Sur la figure 2 est représenté un turboréacteur double corps double flux selon l'invention, dans lequel de la puissance mécanique est prélevée sur un, ou sur les deux, arbres du turboréacteur au travers de prises de mouvement (non représentées) Ces prises de mouvement sont généralement, d'une part montées sur l'arbre sur lequel elles prélèvent de la puissance et, d'autre part rattachées à un réducteur 17 pour ramener leur vitesse de rotation à des valeurs compatibles avec le fonctionnement des équipements qu'ils entraînent.

Le schéma de la figure 2 tente d'illustrer tous les cas envisageables de prélèvement de puissance sur les arbres d'un turboréacteur double corps double flux, sans que cela corresponde à une utilisation particulière, des cas pratiques étant alors détaillés en relation avec les figures suivantes.

En ce qui concerne le corps BP, une puissance d'une valeur w3 est prélevée, au travers d'une prise de mouvement, que ce soit au niveau de la turbine, comme cela est représenté sur la figure 2, ou à tout autre endroit sur l'arbre BP 10, par un arbre d'extraction de puissance BP (non représenté). Cet arbre d'extraction de puissance BP débouche sur le réducteur 17 qui est lui-même relié à un générateur électrique 7 qui transforme l'énergie w3 reçue en énergie électrique. Celle-ci peut, comme cela est représenté sur la figure 2, être stockée dans un moyen de stockage électrique 9 ou bien, comme cela sera explicité dans les cas d'utilisation des figures suivantes, envoyée directement, par un moteur électrique 8 d'injection de puissance, sur un des arbres du turboréacteur.

Le moyen de stockage électrique 9 peut classiquement être du type batterie lithium-ion, super capacité ou pile à combustible. L'énergie produite par le générateur électrique 7 et qui est fournie à ce moyen de stockage électrique 9, est désignée par la quantité w4.

De la même façon, une puissance w5 peut être prélevée sur le corps HP, que ce soit au niveau de la turbine comme cela est représenté sur la figure ou à tout autre endroit de l'arbre HP 20. Elle est, là encore, extraite par un arbre d'extraction de puissance HP (non représenté) au travers d'une prise de mouvement monté sur cet arbre. L'arbre d'extraction de puissance HP débouche sur un réducteur 17, représenté ici par simplification comme le même que celui de l'arbre d'extraction de puissance BP. De même que précédemment le réducteur 17 est relié à un générateur électrique 7 qui transforme l'énergie mécanique w5 reçue en énergie électrique w4.

Par ailleurs un prélèvement de puissance mécanique w7 est classiquement effectué pour entraîner les accessoires du moteur et fournir de la puissance mécanique à l'aéronef, à l'aide d'une boîte d'engrenage connue sous le nom de relais d'accessoires 19.

La puissance prélevée sur l'un ou sur les deux arbres, qu'elle soit ou non stockée, a vocation selon l'invention à être réinjectée sur l'un ou sur les deux arbres à l'aide des dispositifs suivants :
Un moteur électrique 8 est alimenté en courant électrique soit directement par le générateur électrique 7, soit par le dispositif de stockage 9, et fournit de la puissance mécanique à un arbre d'injection de puissance (non représenté) qui engrène sur l'un ou les deux arbres du turboréacteur au travers d'un réducteur 18. La puissance mécanique délivrée à l'arbre BP 10 est désignée par la quantité w1 et celle délivrée à l'arbre HP 20 est désignée par la quantité w2.

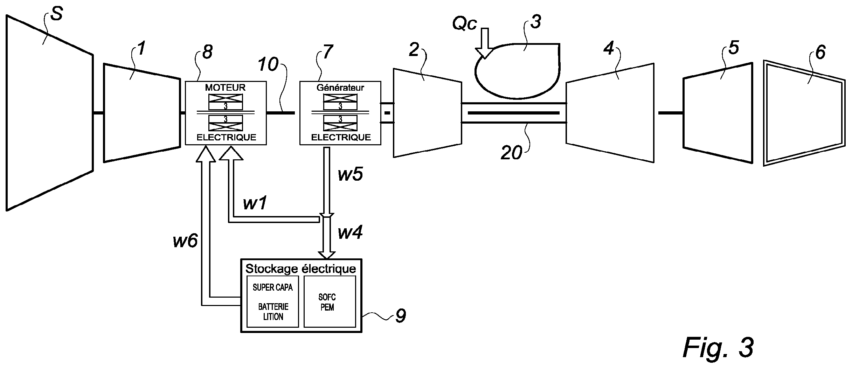

En se référant maintenant à la figure 3 on voit un mode de réalisation de l'invention dans lequel de la puissance est injectée mécaniquement sur l'arbre BP 10.

Le générateur électrique 7 est ici entraîné par l'arbre HP 20 sur lequel il prélève une puissance w5. Celle-ci est, en fonctionnement, envoyée sur le moteur électrique 8 qui est couplé mécaniquement à l'arbre BP 10. La puissance w5 se répartit entre une valeur w1 choisie par le concepteur du turboréacteur pour améliorer les performances du moteur au point de fonctionnement considéré et une valeur w4 qui est envoyée sur le moyen de stockage 9. Ce dernier agit ainsi comme un tampon dans le circuit de fourniture d'énergie à l'arbre considéré.

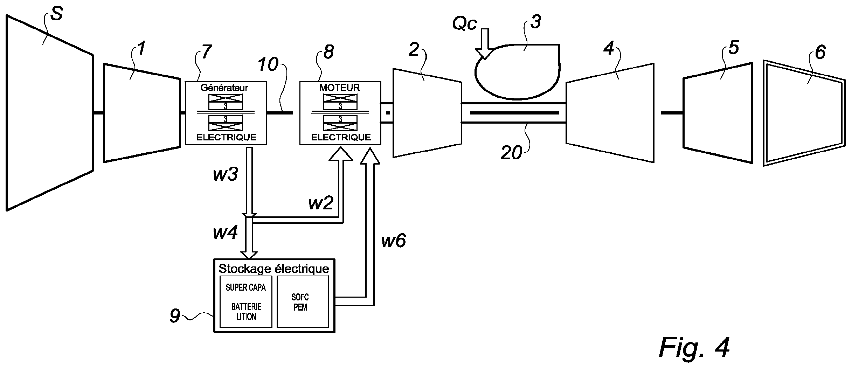

De façon similaire, la figure 4 montre un mode de réalisation dans lequel de la puissance est injectée mécaniquement sur l'arbre HP 20.

Le générateur électrique 7 est ici entraîné par l'arbre BP 10 sur lequel il prélève une puissance w3. Celle-ci est, en fonctionnement, envoyée sur le moteur électrique 8 qui est couplé mécaniquement à l'arbre HP 20. La puissance w3 se répartit entre une valeur w2 choisie par le concepteur du turboréacteur pour améliorer la marge au pompage au point de fonctionnement considéré et une valeur excédentaire w4 qui est envoyée sur le moyen de stockage 9 dans le cas où la puissance fournie est supérieure au besoin de puissance de l'arbre HP. Dans le cas contraire, c'est-à-dire si la puissance w3 qui peut être prélevée sur l'arbre BP est insuffisante car inférieure au w2 recherché, il y a déstockage d'une quantité d'énergie w6 à partir du moyen de stockage 9 et transmission de cette énergie au moteur électrique 8.

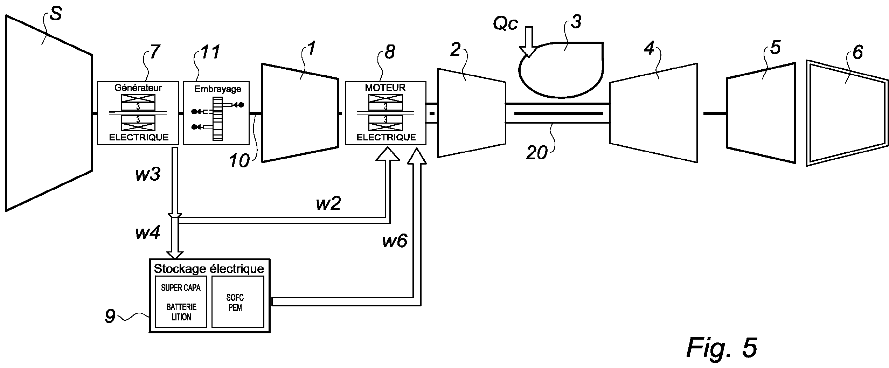

La figure 5 montre un cas particulier d'injection de puissance sur l'arbre HP, dans lequel le générateur électrique 7 est inséré sur l'arbre BP 10 entre le compresseur BP 1 et la soufflante S. Un dispositif d'embrayage et débrayage 11 est installé entre le compresseur BP 10 et la soufflante S pour permettre un fonctionnement en autorotation de la soufflante, et le générateur électrique est entrainé à partir d'une prise de mouvement qui est située du côté de l'arbre de la soufflante. Cette configuration est utilisée, par exemple, en cas de fonctionnement au ralenti en vol ou d'extinction du turboréacteur, la soufflante assurant alors la production d'énergie électrique par son autorotation.

Dans cette configuration le générateur électrique 7 est entraîné par l'arbre de soufflante qui est déconnecté de l'arbre BP 10. La puissance w3 qu'il prélève sur l'arbre de soufflante est envoyée sur le moteur électrique 8, qui est couplé mécaniquement à l'arbre HP 20. Comme dans le cas précédent, la puissance w3 se répartit entre une valeur w2 qui est injectée sur l'arbre HP 20 pour assurer sa rotation et permettre, éventuellement, un rallumage de la chambre de combustion, et une valeur excédentaire w4 qui est envoyée sur le moyen de stockage 9. Au besoin, si la puissance w3 est insuffisante, il y a déstockage d'une quantité d'énergie w6 à partir du moyen de stockage 9 et transmission de cette énergie au moteur électrique 8 pour l'injection d'une puissance complémentaire sur l'arbre HP.

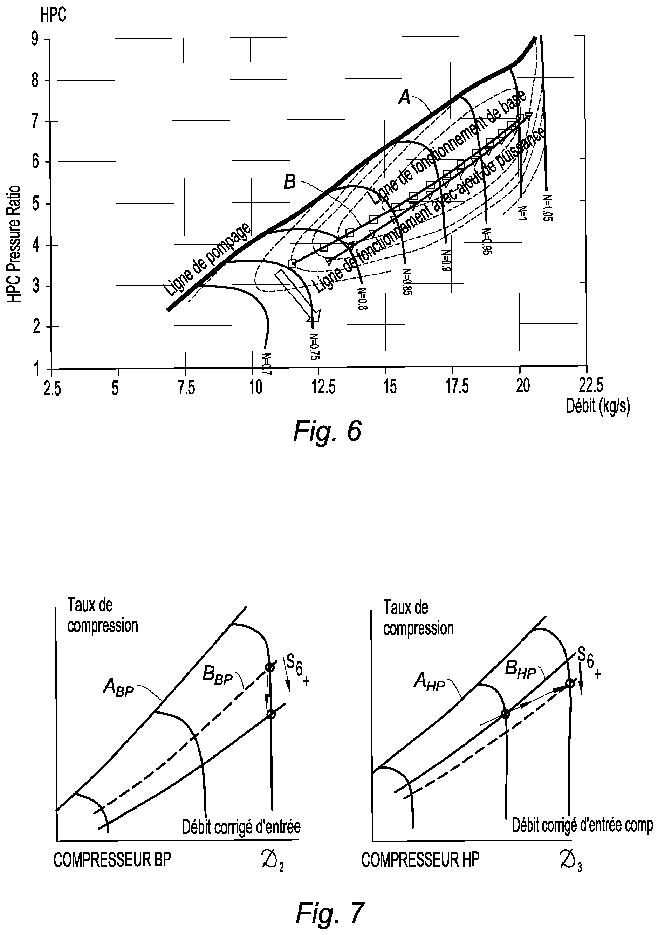

La figure 6 montre le diagramme du compresseur HP d'un turboréacteur double corps double flux équipé d'un dispositif, selon l'invention, d'injection de puissance sur l'arbre HP.

Ce diagramme donne classiquement l'évolution du taux de compression délivré par le compresseur en fonction du débit qui le traverse et il est paramétré selon sa vitesse de rotation, qui est exprimée en pourcentage de la vitesse de rotation au décollage. En fonction des paramètres de fonctionnement du moteur le point représentatif du fonctionnement du compresseur se déplace dans ce diagramme en restant en dessous de la ligne de pompage A, qui est, elle, une caractéristique du compresseur.

On constate, classiquement, sur ce diagramme que les courbes d'iso-rendements du compresseur ont une forme ovale dont le grand axe est aligné sensiblement parallèlement à la ligne de pompage. La ligne B qui relie les points de meilleurs rendements constitue alors un optimum pour le positionnement de la ligne de fonctionnement. En revanche un tel positionnement procure une marge au pompage qui est généralement insuffisante et il est courant dans l'art antérieur de décaler cette ligne vers le bas pour fonctionner avec des marges acceptables, au détriment du rendement du compresseur et donc de la consommation spécifique du turboréacteur.

L'invention propose donc de positionner cette ligne de fonctionnement de manière optimale au niveau du rendement du compresseur, c'est à dire avec des marges au pompage certes réduites, mais d'y associer la mise en œuvre sur commande, d'un dispositif d'injection de puissance, qui génère pendant le temps nécessaire une marge au pompage accrue, comme cela va être expliqué en relation avec la figure 7. Pendant tout le temps de mise en œuvre de ce dispositif la ligne de fonctionnement est décalée vers le bas dans la position, dans une position de ligne de fonctionnement à marge augmentée C.

La figure 7 montre l'influence dans les champs compresseurs BP et HP d'une injection de puissance sur l'arbre HP, à fort régime (c'est-à-dire de façon pratique à une vitesse de rotation supérieure ou égale à 80% de la vitesse de rotation au plein gaz) et l'impact qu'elle a sur le positionnement de la ligne de fonctionnement du moteur dans chacun de ces champs.

Aux forts régimes l'écoulement des gaz dans le générateur de gaz se caractérise par deux cols soniques, qui sont positionnés, pour l'un au niveau du distributeur de turbine HP et pour l'autre au niveau de la section de la tuyère primaire. Cela se traduit aérodynamiquement par un blocage de l'écoulement à ces deux endroits et donc par une conservation de la charge de l'ensemble des deux turbines, quelles que soient les modifications effectuées sur le cycle en amont de ces points, pour autant que l'on conserve le même taux de compression global (rapport entre la pression en sortie du compresseur HP et entrée du compresseur BP) et la même température en sortie de la chambre de combustion.

Une injection de puissance sur l'arbre HP, qui a les mêmes effets pratiques qu'une ouverture de la section S6 du distributeur BP, entraîne alors ipso facto une diminution de la charge de la turbine BP.

La charge de la turbine BP diminuant, cela se traduit dans son champ compresseur par une diminution, à régime constant, du taux de compression BP et donc par un éloignement de la ligne de fonctionnement B_{BP} de celle de pompage A_{BP} (cf. figure de gauche). Cet éloignement s'effectue à vitesse de rotation constante et donc sensiblement perpendiculairement à la ligne de pompage. L'injection de puissance sur l'arbre HP est en conséquence bénéfique en ce qui concerne l'amélioration de la marge au pompage du compresseur BP.

En ce qui concerne le compresseur HP, sa charge augmente mais la section du distributeur HP étant bloquée en aval, la ligne de fonctionnement se déplace vers la droite, à taux de compression sensiblement constant. Compte tenu de l'allure ascendante de la ligne de fonctionnement, ce déplacement vers la droite se traduit par un éloignement du point de fonctionnement B_{HP} de la ligne de pompage A_{HP} et donc par une augmentation de la marge correspondante du compresseur HP (cf. figure de droite).

Enfin, en ce qui concerne le fonctionnement de la soufflante, qui n'est pas soumise au phénomène de blocage de l'écoulement, sa ligne de fonctionnement ne bouge pas sensiblement et on reste dans le même régime qu'en l'absence d'injection de puissance.

Les gains apportés par l'invention aux forts régimes ont été évalués et se présentent de la façon suivante, pour une injection d'une puissance de 500 cv à fort régime, sur l'arbre HP:
un gain de 1,7% sur la marge au pompage du compresseur BP au régime de décollage,
un gain de 1,4% sur la marge au pompage du compresseur HP, et
un gain minime de 0,07% sur la marge au pompage de la soufflante.

Au final on voit qu'une injection de puissance sur l'arbre HP produit une amélioration des marges tant sur le compresseur HP que sur la compresseur BP. Un concepteur de turboréacteur peut donc, en prévoyant un dispositif d'injection de puissance, positionner les lignes de fonctionnement de ses deux compresseurs plus près de la ligne de la ligne de pompage que dans l'art antérieur et ainsi bénéficier de l'optimum de rendement de ceux-ci. La réduction de la marge au pompage qui y est associée est compensée par un actionnement à la demande d'une injection de puissance sur l'arbre HP, comme par exemple lors d'une demande d'augmentation de la poussée par le pilote.

Une injection de puissance sur l'arbre HP est également envisageable à d'autres régimes de fonctionnement du turboréacteur et, en particulier, en fonctionnement en autorotation de la soufflante lors de la descente ou au régime de ralenti en vol.

Le régime d'autorotation de la soufflante, en la débrayant du corps BP au travers d'un dispositif d'embrayage/débrayage 11, comme décrit en relation avec la figure 5, permet de récupérer l'énergie associée à la vitesse de l'avion et d'utiliser cette énergie pour charger le moyen de stockage électrique 9 en vue d'une utilisation ultérieure pour améliorer les marges au pompage ou assister le ralenti en vol. Cette configuration peut permettre en outre de recharger tout autre moyen de stockage électrique pouvant se trouver sur l'avion.

En ce qui concerne une assistance au ralenti en vol il convient de remarquer que cette phase de la croisière d'un avion est consommatrice de carburant du fait que, malgré la recherche d'une poussée la plus faible possible, il faille assurer une vitesse de rotation minimale aux corps HP et BP. A défaut la chambre de combustion courre le risque de s'éteindre. Tout cela nécessite de conserver un régime de ralenti vol relativement élevé et donc, dans l'art antérieur, de consommer du carburant à cette fin. Il est souhaitable de réduire cette consommation, pour autant que la réduction de poussée résiduelle qui y est associée, n'entraîne pas la nécessité de prolonger la croisière de façon excessive. Sous réserve d'une évaluation du gain global sur la consommation au cours d'un vol, l'apport d'une injection de puissance sur l'arbre HP peut constituer une solution intéressante pour réduire le besoin en carburant au régime de ralenti en vol et tenter d'améliorer la consommation de carburant d'un aéronef.

En descente, au ralenti en vol, un certain nombre de fonction doivent rester assurées par le ou les moteurs d'un aéronef, à savoir :
conserver une richesse minimale dans la chambre de combustion pour éviter une extinction dite "pauvre", par insuffisance de carburant en regard du débit d'air qui la traverse,
conserver un régime minimum pour permettre une ré-accélération du moteur si le pilote en fait la demande, et
délivrer une pressurisation à l'aéronef et donc conserver une vitesse de rotation des arbres HP et BP qui permettent un niveau de pression statique minimal en sortie du compresseur HP (ou tout au moins au niveau de l'étage de compression où se situe le piquage de prélèvement d'air).

Une injection de puissance sur l'arbre HP à l'aide d'un moteur électrique 8, comme celui mis en place pour améliorer les marges au pompage aux forts régimes, permet, en fournissant une partie de la puissance qui est nécessaire pour assurer les trois fonctions ci-dessus, de réduire la puissance fournie par une combustion de carburant et donc la quantité de carburant qui est injectée au ralenti vol. Au final les deux corps BP et HP tournent à des vitesses de rotation analogues à celles de l'art antérieur, mais avec une consommation de carburant réduite.

Le rendement énergétique de la combustion au ralenti étant relativement faible, par comparaison avec son rendement aux régimes élevés (c'est-à-dire là où s'effectue généralement la recharge du moyen de stockage électrique 9), un apport de puissance par le moteur électrique 8 combiné à une réduction de fourniture de puissance par le générateur de gaz, est bénéfique pour le bilan énergétique global. L'invention permet ainsi d'améliorer la consommation d'un aéronef lors d'un vol, sans qu'il soit besoin d'introduire des dispositifs supplémentaires, ceux-ci étant déjà implantés pour améliorer les marges au pompage des compresseurs.

L'invention porte donc sur un dispositif permettant l'injection d'une certaine puissance sur un des arbres du turboréacteur, cette puissance pouvant être prélevée en direct sur l'un ou sur les deux arbres, ou bien être restituée à partir d'un moyen de stockage d'énergie électrique qui reçoit cette énergie de la part d'un générateur entraîné par au moins un desdits arbres.

L'impact d'un prélèvement de puissance et d'une injection de puissance sur les différents arbres peut se résumer comme suit :
Cas d'un apport de puissance sur l'arbre HP :
   Il améliore la marge des compresseurs HP et BP et permet ainsi de positionner la ligne de fonctionnement du moteur dans les champs compresseurs plus près de la ligne de pompage que précédemment et de bénéficier de meilleurs rendements,
   Il permet de réduire la poussée au ralenti en vol et ainsi de réduire la consommation globale de carburant sur un vol.
Cas d'un apport de puissance sur l'arbre BP :
   Il dégrade la marge au pompage du compresseur BP,
   mais il permet une réduction de la consommation de carburant à poussée constante car celle-ci est en partie produite par le système d'injection de puissance sur l'arbre
Cas d'un prélèvement de puissance sur l'arbre HP (en sus du prélèvement de puissance habituel w7 pour les servitudes) :
   il permet le stockage d'énergie pour des utilisations ultérieures, ce stockage étant effectué lors de points de fonctionnement à distance suffisante de la ligne de pompage,
   en revanche il dégrade la marge au pompage du compresseur HP, lors de sa mise en œuvre.
Cas d'un prélèvement de puissance sur l'arbre BP :
   il permet le stockage d'énergie pour des utilisations ultérieures, sans pénalité sur les marges au pompage des compresseurs, tant HP que BP,
   il augmente la marge au pompage du compresseur BP, mais au détriment d'une pénalisation sur la poussée ou sur la consommation spécifique du moteur,
   il permet la récupération d'énergie sur l'arbre BP lors de la descente, grâce à l'effet d'autorotation de la soufflante.
Cas d'un prélèvement de puissance sur un arbre et apport simultané de cette puissance sur l'autre :
   il permet le couplage électrique des deux arbres en descente (prélèvement sur l'arbre BP et apport sur l'arbre HP pour éviter les extinctions de chambre),
   il permet le couplage des deux arbres pour un meilleur contrôle de l'accélération des deux corps et une meilleure gestion de leurs vitesses de rotation.

Au final on voit que les configurations les plus favorables, sans que les autres sortent du cadre de l'invention, consistent en un prélèvement de puissance sur l'arbre BP et en une injection de puissance sur l'arbre HP. Cette configuration permet d'une part d'améliorer les marges au pompage des deux compresseurs aux régimes élevés, ce qui autorise un positionnement de la ligne de fonctionnement plus proche des meilleurs rendements, et d'autre part de réduire la quantité de carburant nécessaire au ralenti en vol ce qui est bénéfique pour la consommation globale au cours d'un vol.

La variation de puissance électrique du réseau de bord d'un aéronef due à un besoin sur les servitudes pour un aéronef plus électrique se traduit par un appel de courant qui peut être détecté et dont la valeur du signal par rapport à des seuils définis peut servir à ajuster les équilibres entre le générateur de gaz et le moteur électrique en faisant varier les lois de commande du système FADEC. Ce système peut comprendre une partie de gestion de l'électronique de puissance, qui adresse le contrôle des régimes du moteur électrique, et une partie de gestion thermique, qui adresse les lois de commande de la partie thermique du moteur (générateur de gaz). Ce système peut comprendre les lois de commande hybrides des combinaisons de mode des dispositifs, qui sont traduites par les parties de gestion précitées du système en consignes respectives. Le système peut aussi être un seul et même boitier intégrant toutes les lois, et ce en fonction de l'historique du générateur de gaz que l'on hybride ou du turbopropulseur conçu hybride dès le début.

## Revendications

1. Turboréacteur double corps double flux comprenant une soufflante (S) positionnée en amont d'un générateur de gaz et délimitant un flux primaire et un flux secondaire, ledit générateur de gaz étant traversé par le flux primaire et comprenant un compresseur basse pression (1), un compresseur haute pression (2), une chambre de combustion (3), une turbine haute pression (4) et une turbine basse pression (5), ladite turbine basse pression étant reliée audit compresseur basse pression par un arbre de rotation basse pression (10) et ladite turbine haute pression étant reliée audit compresseur haute pression par un arbre de rotation haute pression (20), **caractérisé par le fait que** ledit turboréacteur comprend un moteur électrique formant un dispositif d'injection de puissance mécanique (8) sur au moins un des dits arbres de rotation (10, 20), un dispositif de prélèvement de puissance (7) sur au moins un desdits arbres de rotation, dimensionné pour extraire une puissance excédentaire (w3, w5) par rapport au besoin d'actionnement de servitudes du turboréacteur (w7), transformant ladite puissance excédentaire en énergie électrique, et un moyen de stockage électrique (9) positionné entre ledit dispositif de prélèvement de puissance et ledit moteur électrique, le prélèvement de puissance s'effectuant sur l'arbre de rotation basse pression (10) et l'injection de puissance (w1, w2) s'effectuant sur l'arbre de rotation haute pression (20), dans lequel l'injection de puissance est effectuée à une vitesse de rotation du corps haute pression supérieure ou égale à 80% de sa vitesse de rotation au plein gaz ou dans lequel l'injection de puissance est effectuée au ralenti en vol.

2. Turboréacteur selon la revendication 1 dont le dispositif d'injection de puissance et le dispositif de prélèvement de puissance forment un dispositif unique réversible.

3. Turboréacteur selon la revendication 1 dans lequel le moteur électrique (8) est relié audit dispositif de prélèvement de puissance (7) et engrène sur le ou lesdits arbres de rotation pour assurer ladite injection de puissance.

4. Turboréacteur selon la revendication 3 dans lequel le moyen de stockage électrique (9) est positionné en parallèle entre ledit dispositif de prélèvement de puissance et ledit moteur électrique.

5. Turboréacteur selon l'une des revendications 1 à 4 comprenant en outre un dispositif de prélèvement de puissance sur l'arbre basse pression (10) dimensionné pour extraire une puissance excédentaire (w3) par rapport au besoin d'actionnement des servitudes du turboréacteur (w7).

6. Turboréacteur selon l'une des revendications 1 à 5 comprenant en outre un dispositif de débrayage (11) entre l'arbre basse pression (10) et l'arbre d'entraînement de la soufflante (S) et comprenant un dispositif de prélèvement de puissance sur l'arbre d'entraînement de la soufflante relié audit dispositif d'injection de puissance sur l'arbre haute pression (20).

7. Turboréacteur selon la revendication 6 dans lequel l'injection de puissance est effectuée au cours du mode débrayé du dispositif de débrayage (11).

8. Turboréacteur selon l'une des revendications 1 à 7 dans lequel l'injection de puissance (w1, w2) s'effectue également sur l'arbre basse pression (10).

## Patentansprüche

1. Turbostrahltriebwerk mit Doppelkörper und Doppelstrom, umfassend ein Gebläse (S), das stromaufwärts eines Gasgenerators positioniert ist und einen Primärstrom und einen Sekundärstrom begrenzt, wobei der Gasgenerator von dem Primärstrom durchlaufen wird und einen Niederdruckverdichter (1), einen Hochdruckverdichter (2), eine Brennkammer (3), eine Hochdruckturbine (4) und eine Niederdruckturbine (5) umfasst, wobei die Niederdruckturbine durch eine Niederdruckrotationswelle (10) mit dem Niederdruckverdichter verbunden ist, und wobei die Hochdruckturbine durch eine Hochdruckrotationswelle (20) mit dem Hochdruckverdichter verbunden ist, **dadurch gekennzeichnet, dass** das Turbostrahltriebwerk einen Elektromotor, der eine mechanische Leistungseinspritzvorrichtung (8) an mindestens einer der Rotationswellen (10, 20) bildet, eine Leistungsentnahmevorrichtung (7) an mindestens einer der Rotationswellen, die so dimensioniert ist, dass sie eine überschüssige Leistung (w3, w5) in Bezug auf den Antriebsbedarf der Lasten des Turbostrahltriebwerks (w7) entnimmt, wobei sie die überschüssige Leistung in elektrische Energie umwandelt, und ein elektrisches Speichermittel (9) umfasst, das zwischen der Leistungsentnahmevorrichtung und dem Elektromotor positioniert ist, wobei die Leistungsentnahme an der Niederdruckrotationswelle (10) erfolgt und wobei die Leistungseinspritzung (w1, w2) an der Hochdruckrotationswelle (20) erfolgt, wobei die Leistungseinspritzung bei einer Drehzahl des Hochdruckkörpers ausgeführt wird, die größer oder gleich 80 % seiner Drehzahl bei Vollgas ist oder wobei die Leistungseinspritzung im Leerlauf im Flug ausgeführt wird.

2. Turbostrahltriebwerk nach Anspruch 1, wobei die Leistungseinspritzvorrichtung und die Leistungsentnahmevorrichtung eine einzige reversible Vorrichtung bilden.

3. Turbostrahltriebwerk nach Anspruch 1, wobei der Elektromotor (8) mit der Leistungsentnahmevorrichtung (7) verbunden ist und mit der oder den Drehwellen in Eingriff steht, um die Leistungseinspritzung sicherzustellen.

4. Turbostrahltriebwerk nach Anspruch 3, wobei das elektrische Speichermittel (9) parallel zwischen der Leistungsentnahmevorrichtung und dem Elektromotor positioniert ist.

5. Turbostrahltriebwerk nach einem der Ansprüche 1 bis 4, weiter umfassend eine Leistungsentnahmevorrichtung an der Niederdruckwelle (10), die so bemessen ist, dass sie überschüssige Leistung (w3) in Bezug auf den Antriebsbedarf der Lasten des Turbostrahltriebwerks (w7) entnimmt.

6. Turbostrahltriebwerk nach einem der Ansprüche 1 bis 5, weiter umfassend eine Entkupplungsvorrichtung (11) zwischen der Niederdruckwelle (10) und der Gebläseantriebswelle (S), und umfassend eine Leistungsentnahmevorrichtung an der Gebläseantriebswelle, die mit der Leistungseinspritzvorrichtung an der Hochdruckwelle (20) verbunden ist.

7. Turbostrahltriebwerk nach Anspruch 6, wobei die Leistungseinspritzung im entkuppelten Modus der Entkupplungsvorrichtung (11) ausgeführt wird.

8. Turbostrahltriebwerk nach einem der Ansprüche 1 bis 7, wobei die Leistungseinspritzung (w1, w2) auch an der Niederdruckwelle (10) ausgeführt wird.

## Claims

1. Twin-spool bypass turbojet engine comprising a fan (S) positioned upstream from a gas generator and delimiting a primary flow and a secondary flow, said gas generator having the primary flow pass through it and comprising a low-pressure compressor (1), a high-pressure compressor (2), a combustion chamber (3), a high-pressure turbine (4) and a low-pressure turbine (5), said low-pressure turbine being connected to said low-pressure compressor by a low-pressure rotating shaft (10) and said high-pressure turbine being connected to said high-pressure compressor by a high-pressure rotating shaft (20), **characterised by** the fact that said turbojet engine comprises an electric motor forming a device (8) for applying mechanical power to at least one of said rotating shafts (10, 20), a device (7) for drawing power from at least one of said rotating shafts, sized so as to extract excess power (w3, w5) relative to the requirement for actuating the auxiliary systems of the turbojet engine (w7), transforming said excess power into electrical energy, and an electricity storage means (9) positioned between said power take-off device and said electric motor, the power being drawn from the low-pressure rotating shaft (10) and power (w1, w2) being applied to the high-pressure rotating shaft (20), wherein the power is applied at a rotation speed of the high-pressure body greater than or equal to 80 % of its rotation speed at full throttle or wherein the power is applied at in-flight idling speed.

2. Turbojet engine according to claim 1, wherein the power application device and power take-off device form a single reversible device.

3. Turbojet engine according to claim 1, wherein the electric motor (8) is connected to said power take-off device (7) and meshes on said rotation shaft or shafts in order to provide said application of power.

4. Turbojet engine according to claim 3, wherein the electrical storage means (9) is positioned in parallel with said power take-off device and said electric motor.

5. Turbojet engine according to any of claims 1 to 4, further comprising a device for drawing power from the low-pressure shaft (10) sized so as to extract excess power (w3) compared with the requirement (w7) for actuating the auxiliary systems of the turbojet engine.

6. Turbojet engine according to any of claims 1 to 5, further comprising a disconnection device (11) between the low-pressure shaft (10) and the shaft driving the fan (S) and comprising a device for drawing power from the driveshaft of the fan connected to the device for applying power to the high-pressure shaft (20).

7. Turbojet engine according to claim 6, in which the power is applied during the disconnecting mode of the disconnection device (11).

8. Turbojet engine according to any of claims 1 to 7, wherein the power (w1, w2) is also applied to the low-pressure shaft (10).
